# EUROPÄISCHE PATENTANMELDUNG

(11) **EP 1 486 687 A2**
(43) Veröffentlichungstag der Anmeldung: **15.12.2004**
(21) Anmeldenummer: 04019577.8
(22) Anmeldetag: 16.12.2003
(51) Int. Cl.: F16C 11/04, F16C 17/10, B62D 7/16, B60G 7/00, F16C 11/06

(54) **Gelenk mit zwei kugelförmigen Gleitlagerbereichen für radiale und axiale Belastung**

(30) Priorität: 16.12.2002 DE 10258985
(62) Teilanmeldung aus: 03028876.5
(71) Anmelder: ZF Lemförder Metallwaren AG, 49448 Lemförde (DE)
(72) Erfinder: Hagemann, Andreas, 49324 Melle (DE)

(57) **Zusammenfassung**

Es wird ein Gelenk zum Einsatz bei Fahrwerken und Kraftfahrzeugen vorgestellt, welches ein Gelenkgehäuse, ein mit einer Lagerfläche versehenes Innenteil und eine die Lagerfläche umschließende in einer Ausnehmung des Gelenkgehäuses aufgenommene Lagerschale aus elastisch verformbarem Kunststoffmaterial aufweist. Eine erfindungsgemäße Gestaltung des Gelenkes zur Verhinderung von kardanischen Bewegungen, d.h. Kippbewegungen zwischen Innenteil und einteiligem Gelenkgehäuse, ist die Ausbildung der Lagerfläche mit zwei in axialer Längsrichtung des Gelenkes benachbart nebeneinander angeordneten kugelförmig ausgebildeten Lagerbereichen.

## Beschreibung

Die Erfindung betrifft ein Kugelgelenk insbesondere zum Einsatz bei Fahrwerken und Lenkungen von Kraftfahrzeugen mit einem Gelenkgehäuse, einem mit einer Lagerfläche versehenen Innenteil und einer die Lagerfläche umschließende in einer Ausnehmung des Gelenkgehäuses aufgenommenen Lagerschale aus elastisch verformbarem Kunststoffmaterial.

Kugelgelenke der geschilderten gattungsgemäßen Art sind in vielfältiger Ausgestaltung aus dem Stand der Technik bekannt. Bezüglich des Einsatzes derartiger Kugelgelenke unterscheidet man solche, die neben einer Drehung des Innenteils innerhalb der das Innenteil umgebenden Lagerschale um die Kugelgelenklängsachse zusätzlich eine Kippbewegung des Innenteils relativ zur Kugelgelenklängsachse zulassen sowie solche, bei denen das Anforderungsprofil nur eine Drehbewegung des Innenteils innerhalb der Lagerschale vorsieht. Die letztgenannte Anforderung einer ausschließlichen Drehbewegung lässt sich bei Kugelgelenken, wenn überhaupt, nur durch hohen konstruktiven Aufwand realisieren. Aus diesem Grunde ist für derartige Rahmenbedingungen aus dem Stand der Technik vorrangig der Einsatz von Wälzlagern, wie beispielsweise Nadellagern oder Zylinderrollenlagern bekannt. Derartige Wälzlager sind allerdings mit dem Nachteil behaftet, nicht spielfrei zu sein und besitzen darüber hinaus eine erhöhte Stoßempfindlichkeit.

Alternativ zu den geschilderten Kugelgelenken werden auch so genannte Gummilager eingesetzt, welche üblicherweise aus einem mit einer durchgehenden Innenbohrung versehenem hohlzylinderförmigen Innenteil mit einer dieses umgebenden Gummiummantelung und einem die Gummiummantelung wiederum umschließendem Gelenkgehäuse bestehen. Sie ermöglichen eine Drehung zwischen Innenteil und Gelenkgehäuse nur nach Überschreitung eines maximal zulässigen Drehmomentes und können darüber hinaus Kippbewegungen zwischen innenliegender zylindrischer Hülse und Gelenkgehäuse nicht verhindern. Ferner ist bei diesen Kugelgelenken stets wenigstens eine Mantelfläche der Gummiummantelung festhaftend mit dem Innenteil oder dem Gelenkgehäuse verbunden.

Aufgabe der vorliegenden Erfindung ist es daher, ein Kugelgelenk der eingangs geschilderten gattungsgemäßen Art bereitzustellen, bei dem Kippbewegungen zwischen Innenteil und Gelenkgehäuse unter allen Rahmenbedingungen ausgeschlossen sind.

Diese Aufgabe wird erfindungsgemäß in Zusammenschau mit den gattungsbildenden Merkmalen durch die im kennzeichnenden Teil des Anspruches 1 dargelegte technische Lehre gelöst.

Erfindungsgemäß ist das Gelenkgehäuse einteilig ausgebildet oder zu einem einteiligen Bauteil zusammengefügt und weist die Lagerfläche am Innenteil mindestens zwei in axialer Längsrichtung des Kugelgelenkes benachbart nebeneinander angeordnete kugelförmig ausgebildete Lagerbereiche auf. Durch die zusammenwirkenden kugelförmigen Lagerbereiche kann die bei normalen Kugelgelenken mögliche und gegebenenfalls auch erwünschte kardanische Bewegung zwischen Innenteil und Gelenkgehäuse ausgeschlossen werden.

Besondere Ausgestaltungen des geschilderten erfindungsgemäßen Kugelgelenkes ergeben sich zusätzlich aus den Merkmalen der Unteransprüche.

Es hat sich insbesondere als vorteilhaft erwiesen, die Lagerschale aus zwei Lagerschalenteilen aufzubauen, zwischen deren axial zueinander gerichteten Stirnflächen mindestens ein aus elastisch verformbarem Material bestehendes Abstandselement angeordnet ist. Dieses Abstandselement besteht vorzugsweise aus Kautschukmaterial und gewährleistet einen Spielausgleich in axialer Längsrichtung des Kugelgelenkes, so dass jederzeit trotz vorhandener Toleranzen der Lagerschalenteile deren korrekte Anlage an den kugelförmigen Lagerbereichen des Innenteils gewährleistet ist.

Darüber hinaus hat es sich als zweckmäßig erwiesen, dass die Lagerschalenteile auf ihrer radialen Umfangsfläche Einschnitte in Form schmaler Schlitze aufweisen. Diese Einschnitte unterstützen die Aufweitung der Lagerschalenteile während der Montage des Kugelgelenkes, so dass diese problemlos über die kugelförmig ausgebildeten Lagerbereiche des Innenteils gestülpt werden können.

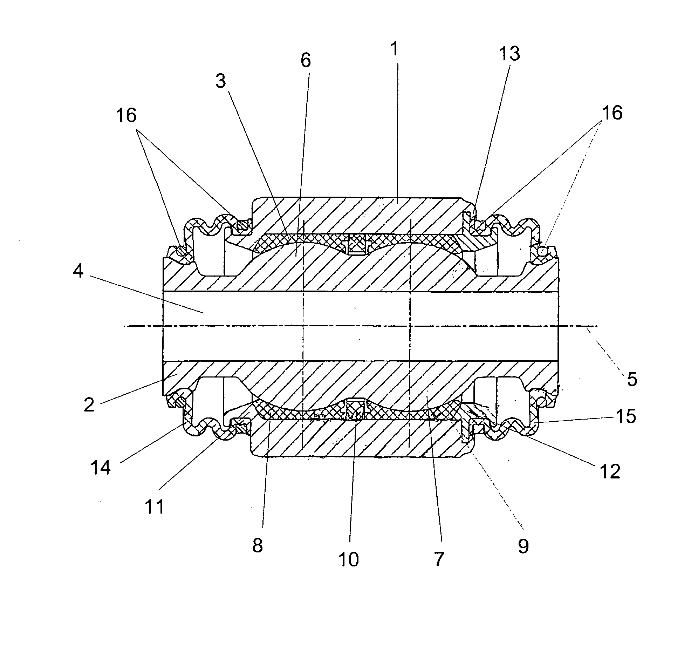

Im Folgenden wird ein Ausführungsbeispiel des Gegenstandes der Erfindung anhand der beigefügten Zeichnung näher erläutert. Es handelt sich dabei um ein so genanntes Kugelhülsengelenk als Sonderbauform eines Kugelgelenkes, bei dem das Innenteil als Gelenkhülse ausgebildet ist, welche eine in Axiallängsrichtung verlaufende Durchgangsbohrung aufweist.

Das dargestellte Kugelhülsengelenk besteht im Wesentlichen aus einem Gelenkgehäuse 1, welches im Wesentlichen rohrförmig ausgebildet ist und einen zylinderförmigen Innenraum definiert, in den ein Innenteil 2 angeordnet ist, wobei sich zwischen Innenteil 2 und Gelenkgehäuse 1 eine das Innenteil umgreifende Lagerschale 3 befindet. Das Innenteil 2 weist eine durchgehende Innenbohrung 4 auf, mit Hilfe dessen das Kugelhülsengelenk beispielsweise an einer korrespondierenden karosserieseitigen Aufnahme eines Fahrzeugfahrwerks oder Fahrzeuglenkungsbauteils festgelegt werden kann.

Als erfindungswesentliches Merkmal weist das Innenteil 2 des Kugelhülsengelenkes in axialer Längsrichtung entsprechend der Gelenkmittelachse 5 zwei nebeneinander angeordnete Lagerbereiche 6 und 7 auf, welche kugelförmig ausgebildet sind. Durch die beiden Lagerbereiche 6 und 7 ist eine Kippbewegung des Innenteiles 2 relativ zur Gelenkmittelachse 5 ausgeschlossen.

Die die beiden Lagerbereiche 6 und 7 umschließende Lagerschale 3 ist im dargestellten Ausführungsbeispiel aus zwei Lagerschalenteilen 8 und 9 aufgebaut. Zwischen den axial zueinander gerichteten Stirnflächen der beiden Lagerschalenteile 8 und 9 befindet sich ein Abstandelement 10, welches vorzugsweise aus Kautschukmaterial hergestellt ist und als Puffer und Ausgleichselement dient. Durch das Abstandelement 10 können Toleranzen in axialer Richtung der Lagerschalenteile 8 und 9 in Bezug auf die korrespondierenden kugelförmigen Lagerbereiche 6 und 7 ausgeglichen werden. An der dem Abstandselement 10 gegenüber liegenden äußeren Stirnfläche des Lagerschalenteiles 8 stützt sich dieses an einer Schulter 11 des Gelenkgehäuses 1 ab, die in den zylindrischen Innenraum vorsteht. Das Lagerschalenteil 9 ist an seiner dem Abstandselement 10 abgewandten Außenseite von einem Stützring 12 in axialer Längsrichtung festgelegt, der wiederum mittels einer umlaufenden, durch einen Verrollungsvorgang hergestellten Nase 13 im Gelenkgehäuse 1 befestigt ist.

Um zu verhindern, das in Folge von Umwelteinflüssen Verunreinigungen in das Innere des Kugelhülsengelenkes in den Spalt zwischen die Lagerbereiche 6, 7 und die korrespondierenden Lagerschalenteile 8 und 9, welche eine Drehbewegung zueinander gewährleisten, gelangen können, ist an beiden Seiten des Kugelhülsengelenkes zwischen Gelenkgehäuse und Innenteil 2 jeweils ein Dichtungsbalg 14 bzw. 15 angeordnet, wobei die Dichtungsbälge 14, 15 am Gelenkgehäuse bzw. am Innenteil durch geeignete Spannringe 16 fixert sind.

### Bezugszeichenliste

- 1.: Gelenkgehäuse
- 2.: Innenteil
- 3.: Lagerschale
- 4.: Innenbohrung
- 5.: Gelenkmittelachse
- 6.: Lagerbereich
- 7.: Lagerbereich
- 8.: Lagerschalenteil
- 9.: Lagerschalenteil
- 10.: Abstandselement
- 11.: Schulter
- 12.: Stützring
- 13.: Nase
- 14.: Dichtungsbalg
- 15.: Dichtungsbalg
- 16.: Spannring

## Patentansprüche

1. Kugelgelenk insbesondere zum Einsatz bei Fahrwerken von Kraftfahrzeugen mit einem Gelenkgehäuse (1), einem mit einer Lagerfläche versehenen Innenteil (2) und einer die Lagerfläche umschließenden, in einer Ausnehmung des Gelenkgehäuses (1) aufgenommen Lagerschale (3),
**dadurch gekennzeichnet, dass**
das Gelenkgehäuse (1) einteilig ist und die Lagerfläche mindestens zwei in axialer Längsrichtung des Kugelgelenkes benachbart nebeneinander angeordnete, kugelförmig ausgebildete Lagerbereiche (6, 7) aufweist.

2. Kugelgelenk nach Anspruch 1,
**dadurch gekennzeichnet, dass**
dass das Innenteil (2) als Gelenkhülse mit einer Durchgangsbohrung (4) ausgebildet ist.

3. Kugelgelenk nach einem der Ansprüche 1 oder 2,
**dadurch gekennzeichnet, dass**
die Lagerschale (3) aus zwei Lagerschalenteilen (8, 9) besteht, zwischen deren axial zueinander gerichteten Stirnflächen mindestens ein aus elastisch verformbarem Material bestehendes Abstandselement (10) angeordnet ist.

4. Kugelgelenk nach Anspruch 3,
**dadurch gekennzeichnet, dass**
das Abstandselement (10) im Wesentlichen aus Kautschuk besteht.

5. Kugelgelenk nach Anspruch 3,
**dadurch gekennzeichnet, dass**
die Lagerschale (3) auf ihrer radialen Umfangsfläche Einschnitte in Form schmaler Schlitze aufweist.
